Europäisches Patentamt

European Patent Office

Office européen des brevets

(11) Numéro de publication: **0 236 150**
**A1**

# DEMANDE DE BREVET EUROPEEN

(21) Numéro de dépôt: **87400062.3**

(22) Date de dépôt: **13.01.87**

(51) Int. Cl.⁴: **F 24 C 15/32**
**A 47 J 37/04**

(30) Priorité: **17.01.86 FR 8600655**

(43) Date de publication de la demande:
**09.09.87 Bulletin 87/37**

(84) Etats contractants désignés:
**BE CH DE ES FR GB IT LI LU NL SE**

(71) Demandeur: **COMPAGNIE EUROPEENNE POUR L'EQUIPEMENT MENAGER "CEPEM"**
**74, rue du Surmelin**
**F-75020 Paris (FR)**

(72) Inventeur: **Bonnet, Jacques**
**THOMSON-CSF SCPI 19, avenue de Messine**
**F-75008 Paris (FR)**

(74) Mandataire: **Phan, Chi Quy et al**
**THOMSON-CSF SCPI 19, avenue de Messine**
**F-75008 Paris (FR)**

(54) Four électrique ventilé à pyrolyse comportant un dispositif de tournebroche.

(57) L'invention est relative à un four à pyrolyse comportant, derrière une paroi (3) verticale de l'enceinte (2) de cuisson, dans le moufle, une turbine (19) de ventilation de l'enceinte couplée directement à l'arbre (20) d'un premier moteur (18).

Le four est caractérisé en ce qu'il comporte derrière ladite paroi un second moteur (21) dont l'arbre (10) est en dehors de la périphérie de la turbine et fait saillie à l'intérieur de l'enceinte, au travers de cette paroi, et en ce qu'il comporte une broche (14) et un berceau (12) amovible comprenant des moyens (11, 15) pour maintenir la broche (14) en regard de la turbine et transmettre le mouvement de rotation du second moteur à la broche.

FIG_5

**Description**

## FOUR ELECTRIQUE VENTILE A PYROLYSE COMPORTANT UN DISPOSITIF DE TOURNEBROCHE.

L'invention est relative à un four électrique ventilé à nettoyage par pyrolyse comportant un dispositif de tournebroche.

Le nettoyage par pyrolyse d'un four est une opération qui consiste à porter à une température de l'ordre de 500°C l'enceinte de cuisson, afin de détruire par la chaleur les dépôts gras et les salissures.

Certains fours à nettoyage par pyrolyse possèdent dans le moufle, derrière une paroi latérale, une turbine de circulation d'air ou de ventilation. Cette turbine a pour rôle de répartir correctement la chaleur dans l'enceinte lors des opérations de cuisson. D'ordinaire, la meilleure répartition est obtenue lorsque la turbine est sur la paroi opposée à la porte et non pas sur une paroi adjacente, en raison des pertes thermiques qui sont importantes au travers de la porte.

Parfois, la turbine est à proximité de résistances de chauffage, placées également dans le moufle, et qui peuvent être mises en service simultanément avec la turbine. Dans ce cas, le four est à chaleur tournante. Lorsque les résistances ne sont pas mises en service simultanément avec la turbine, ou n'existent pas, le four est dit ventilé.

Afin d'obtenir la meillure répartition de chaleur, la turbine doit être à proximité du centre de la paroi où elle se trouve. Pour cela, la turbine est placée en regard du centre de la paroi derrière laquelle elle se trouve, et son souffle est transmis à l'intérieur de l'enceinte grâce à une grille ou un élément similaire placé entre la turbine et l'enceinte de cuisson.

Cependant, ce type de four présente des inconvénients car il ne permet pas l'utilisation d'un tournebroche dont l'axe de rotation de la broche se troube en regard de la turbine, ou de préférence, se trouve confondu avec l'axe de rotation de la turbine, comme dans les fours où le nettoyage est assuré par un autre moyen que la pyrolyse.

En effet, la turbine posséde une vitesse de rotation plus élevée que la broche de tournebroche. Afin de permettre ce fonctionnement, il est connu d'entraîner la turbine par un premier moteur et d'entraîner la broche par une second moteur. Les deux moteurs sont placés à l'extérieur, derrière le moufle. La tourbine est par exemple entraînée directement par l'arbre du premier moteur et le mouvement du second moteur est transmis à la broche, en face de la turbine ou sur son axe de rotation, par un dispositif de renvoi placé dans la moufle. Une extrémité de la broche est enclenchée dans le dispositif de renvoi, et l'autre extrémité, en général près de la porte, est portée par un berceau placé sur les gradins du four.

Or, l'utilisation d'un tel dispositif, avec les matériaux usuels est impossible dans un four à nettoyage par pyrolyse, car lors des opérations successives de pyrolyse, la chaleur élevée régnant aussi dans le moufle détériore les pièces constitutives du dispositif de renvoi.

L'invention permet d'entraîner une broche en regard d'une turbine ou de son axe, à l'intérieur d'un four à nettoyage par pyrolyse.

Selon l'invention, un four à pyrolyse comportant, derrière une paroi verticale de l'enceinte de cuisson, dans le moufle, une turbine de ventilation de l'enceinte liée directement à l'arbre d'un premier moteur, est caractérisé en ce qu'il comporte derrière ladite paroi un second moteur, dont l'arbre est en dehors de la périphérie de la turbine et fait saillie à l'intérieur de l'enceinte, au travers de ladite paroi, et en ce qu'il comporte une broche et un berceau amovible sur lequel se trouvent des moyens pour maintenir la broche en regard de la turbine et transmettre le mouvement de rotation du second moteur à la broche.

Selon une autre caractéristique, les moyens prévus sur le berceau comprennent un dispositif de renvoi pour transmettre le mouvement de l'arbre du second moteur à une extrémité de la broche et un dispositif de maintien de l'autre extrémité de la broche.

Selon une autre caractéristique, le dispositif de renvoi est un dispositif à chaîne et à pignons.

Selon une autre caractéristique, les moyens prévus sur le berceau sont tels que l'axe de rotation de la broche et l'axe de rotation de la turbine sont voisins.

D'autres caractéristiques et avantages de l'invention apparaîtront avec la description de quelques modes de réalisation faite en regard des figures annexées sur lesquelles :

    - la figure 1 est une vue éclatée en perspective des différents éléments constitutifs de l'invention ;

    - la figure 2 représente une vue de dessus du berceau ;

    - la figure 3 représente une vue de détail d'un mode de réalisation des moyens de transmission du mouvement du second moteur à la broche ;

    - la figure 4 est une vue en perspective du four lorsque la broche et le berceau sont en place ;

    - la figure 5 est une vue schématique, de dessus, du four de l'invention.

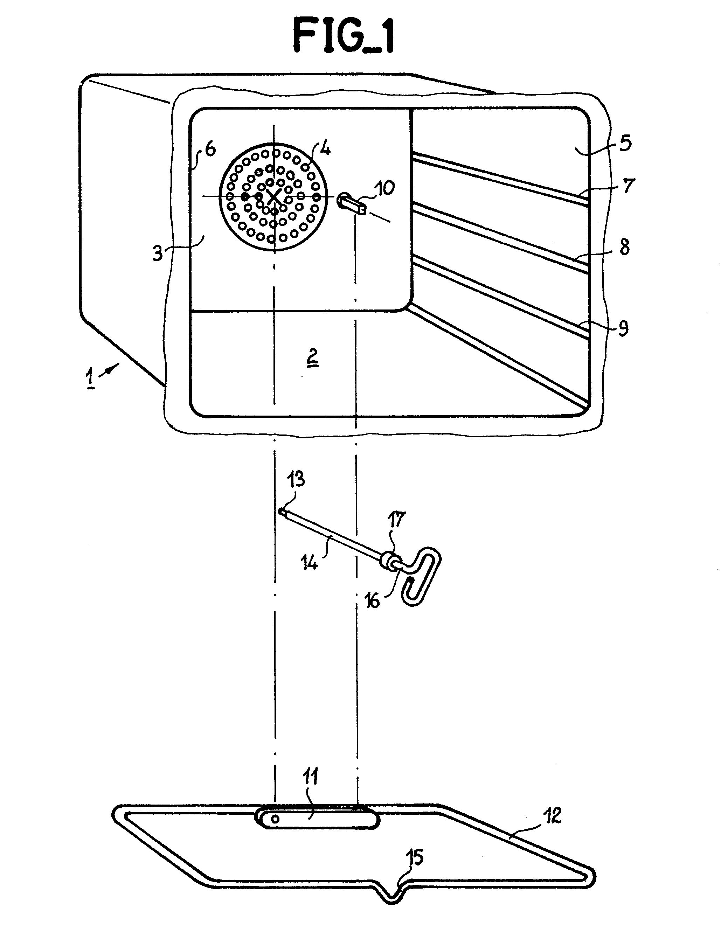

Sur la figure 1, on a représenté un four 1 comportant une enceinte 2 de cuisson dont le chauffage est assuré de façon connue en soi par des résistances de voute, et/ou de sôle, et/ou de grill, non représentées pour ne pas surcharger la figure.

Derrière l'une des parois, dans l'épaisseur du moufle, par exemple la paroi 3 arrière, se trouve une turbine de ventilation non visible sur la figure.

A proximité de la turbine, dans un mode de réalisation, se trouve au moins une résistance permettant la fonctionnement en four à chaleur tournante lorsqu'elle est en service en même temps que la turbine. Lorsque cette résistance n'est pas en service, la turbine permet d'obtenir la fonction de four ventilé. Dans une variante, la résistance est absente : le four est donc un four ventilé.

L'entraînement de la turbine est assuré par un premier moteur électrique rotatif à l'arbre duquel elle est fixée directement. Ce moteur n'est pas visible sur la figure, car il se trouve derrière le moufle, de façon à être isolé de l'enceinte de cuisson.

Le soufle de la turbine est transmis à l'intérieur de l'enceinte par une grille 4 ou une ouverture ménagée dans la paroi 3 entre la turbine et l'enceinte 2 de cuisson.

L'axe de rotation de la turbine est matérialisé par une croix (X) sur la figure.

Sur les parois latérales 5, 6 se trouvent de façon connue des gradins 7, 8, 9, pour offrir la possibilité de placer les plats à cuire ou à réchauffer à des distances différentes par rapport à la sôle ou à la voute.

Une porte, non représentée, est prévue pour fermer l'enceinte lors des utilisations.

Lors des opérations de pyrolyse, on met en service tout ou partie des résistances de chauffage (voûte, grill, sôle), et on régule de façon à maintenir l'enceinte à une température de 500°C environ.

Afin de permettre des cuissons à la broche, avec un bon rendement, un second moteur est placé derrière la paroi 3 adjacente à la turbine, et une extrémité de l'arbre 10 de ce second moteur, ou une pièce de liaison reliée à son arbre, fait saillie à l'intérieur de l'enceinte, au travers de ladite paroi.

L'extrémité de l'arbre 10 ou de la pièce de liaison possède une forme telle qu'elle peut entraîner un pignon d'un dispositif de renvoi 11 à pignons solidaire d'un berceau 12 qui peut être placé sur l'un des gradins 7, 8, 9 de l'enceinte, de façon qu'un autre pignon du dispositif de renvoi 11 se trouve dans la zone d'influence de la turbine, en face de la grille 4.

Cet autre pignon est prévu pour recevoir une première extrémité 13 d'une broche 14 afin de l'entraîner en rotation.

Dans un mode de réalisation, le mouvement de rotation est transmis d'un pignon à l'autre par au moins un pignon intermédiaire, l'ensemble formant un engrenage. Dans une variante préférée, le mouvement est transmis par une chaîne.

L'extrémité de l'arbre 10 du second moteur et l'extrémité 13 de la broche 14 peuvent être l'une et/ou l'autre de forme carrée, rectangulaire, triangulaire, cruciforme, ou de toute autre forme, et les pignons possèdent alors en leur centre un orifice de forme complémentaire pour recevoir l'arbre et/ou la broche et permettre un mouvement de rotation de l'ensemble.

De préférence, on prévoit que le dispositif de renvoi 11 et le berceau 12 soient agencés pour que l'axe de rotation de la broche soit pratiquement alligné sur l'axe de rotation de la turbine.

Le berceau 12 possède également une partie 15 pour recevoir la seconde extrémité 16 de la broche 14. Il peut s'agir d'une partie en forme de coude, ou d'une pièce annexe fixée au berceau et présentant une découpe ou une échancrure pour recevoir ladite extrémité.

Un moyen 17, connu en soi, est prévu sur la broche 14 pour empêcher son retrait accidentel lorsqu'elle est en place sur le berceau 12. Il peut être constitué par une bague, une collerette ou un moyen équivalent.

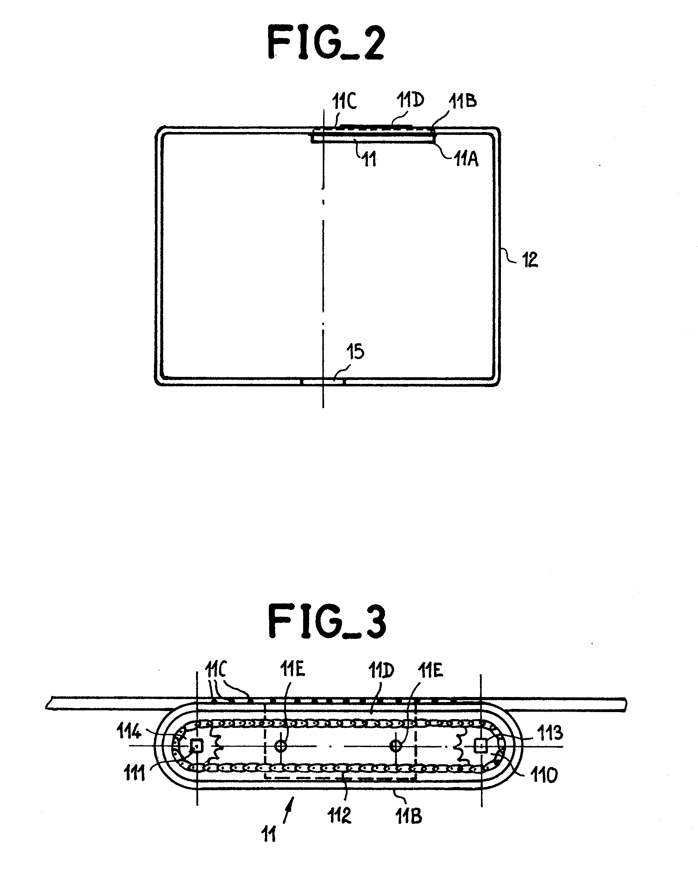

La figure 2 montre une vue de dessus du berceau 12 et du dispositif de renvoi 11. Celui-ci est par exemple constitué d'un boîtier métallique formé de deux demi-coquilles 11A et 11B enfermant deux pignons 110 et 111 et une chaîne 112 comme montré en figure 3. Les pignons sont percés en leur centre d'un orifice 113, 114 pour recevoir, l'un l'arbre 10 du second moteur, et l'autre l'extrémité 13 de la broche 14 respectivement. Une demi coquille 11A comporte un orifice pour le passage de l'extrémité de l'arbre 10 du second moteur vers un pignon 110 et l'autre demi coquille 11B comporte un orifice pour le passage de l'extrémité 13 de la broche vers l'autre pignon 111.

Le dispositif de renvoi 11 est fixé au berceau par soudure de l'une des demi-coquilles 11B sur le berceau. Une plaquette 11D peut être fixée à l'aide de vis ou de soudures 11E à la même demi-coquille 11B et au berceau 12 afin de renforcer la fixation.

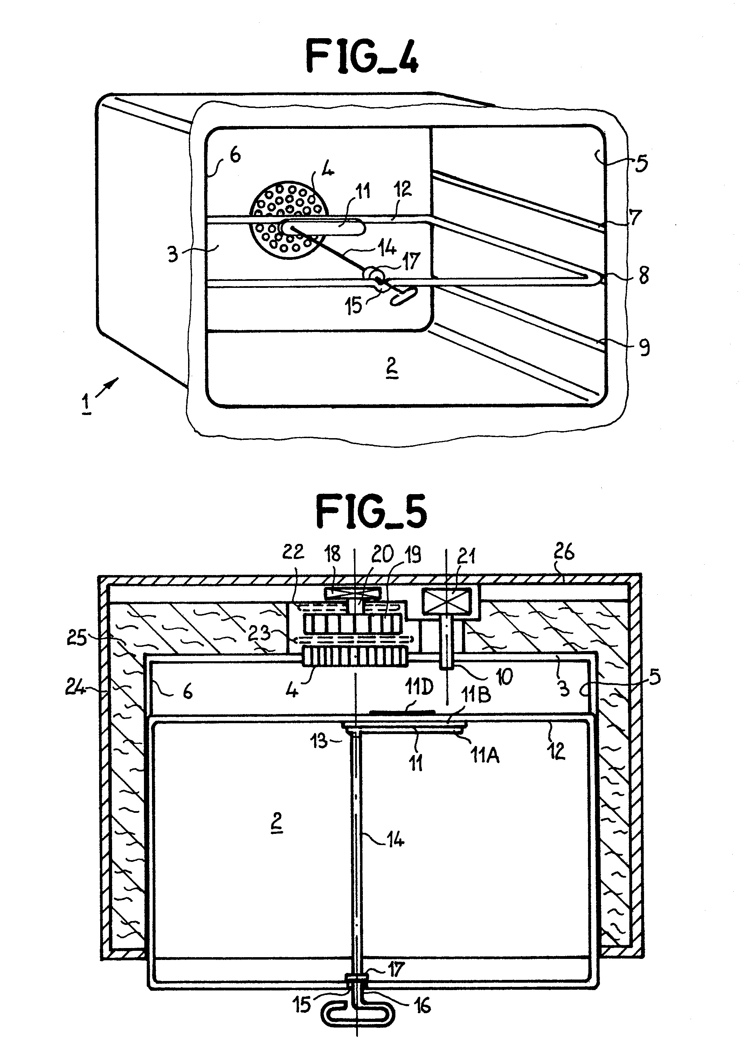

La figure 4 présente le four de l'invention lorsque le berceau 12 supportant le dispositif de renvoi 11 est en position de fonctionnement. L'axe de rotation de la broche 14 est alors en regard de la grille 4 intercalée entre la turbine et l'enceinte.

Plus précisément, sur cette figure, on a représenté la variante selon laquelle l'axe de rotation de la broche 14 est aligné avec l'axe de rotation de la turbine.

L'un des pignons est alors engrené sur l'arbre du second moteur et transmet le mouvement de rotation du moteur à la broche par l'intermédiaire de la chaîne et de l'autre pignon.

La figure 5 permet de visualiser de façon schématique, grâce à une vue en coupe horizontale, la disposition des moteurs dans le moufle.

Le premier moteur 18 pour l'entraînement de la turbine 19 est directement couplé à cette dernière par un arbre 20. Cet ensemble est placé à l'extérieur de l'enceinte 2, derrière la grille 4, dans le moufle.

Le second moteur 21, pour l'entraînement de la broche 14 par l'intermédiaire de l'arbre 10 est également placé à l'extérieur de l'enceinte, dans le moufle, de façon à être isolé de la chaleur. Seule l'extrémité de l'arbre 10 destinée à être reliée au dispositif de renvoi 11 traverse la paroi 3 de l'enceinte par un orifice de communication.

Des résistances 22, 23 sont représentées en traits interrompus à proximité de la turbine. Ces résistances peuvent être ou non présentes selon que la four est à chaleur tournante ou simplement ventilé. Lorsqu'elles sont présentes, elles sont également derrière la grille 4, dans un espace ménagé dans le moufle.

Le moufle, limité par les parois latérales 5, 6 et arrière 3 de l'enceinte de cuisson et par la carcasse 24, 26 de l'appareil, renferme du matériau isolant 25.

Les deux moteurs, la turbine et les résistances éventuelles sont, dans l'exemple, placés à l'intérieur du moufle, dans un espace laissé libre par le matériau isolant.

Dans une variante, non représentée, l'un et/ou l'autre de ces deux moteurs est à l'extérieur de la carcasse pour faciliter la maintenance et être encore mieux isolé de la chaleur lors des opérations de chauffage ou de pyrolyse.

Dans une réalisation perfectionnée non représentée de cette variante, la paroi arrière 26 de la carcasse possède une partie emboutie vers l'intérieur réalisant un logement pour le ou les moteurs situés à l'extérieur, afin d'éviter que ce ou ces moteurs ne fassent saillie à l'arrière de la carcasse, et pour permettre qu'ils soient protégés des chocs contre un mur ou un meuble qui se trouverait à proximité.

Sur cette figure, le berceau 12 est représenté alors qu'il n'est que partiellement engagé dans l'enceinte de cuisson, c'est-à-dire lorsque l'arbre 10 couplé au second moteur 21 n'est pas encore couplé au dispositif de renvoi 11.

Ainsi, en retirant le berceau 12 et la broche 14, on retire également les éléments sensibles à la température de pyrolyse et on évite leur détérioration dûe à la chaleur.

Un autre avantage de l'invention réside dans le fait que les matériaux constitutifs des pièces du dispositif de renvoi 11 doivent supporter simplement les températures usuelles de cuisson et sont donc moins coûteux que des matériaux qui devraient supporter les températures de pyrolyse.

## Revendications

1. Four à pyrolyse comportant, derrière une paroi (3) verticale de l'enceinte (2) de cuisson, dans le moufle, une turbine (19) de ventilation de l'enceinte couplée directement à l'arbre (20) d'un premier moteur (18), caractérisé en ce qu'il comporte derrière ladite paroi un second moteur (21) dont l'arbre (10) est en dehors de la périphérie de la turbine et fait saillie à l'intérieur de l'enceinte, au travers de cette paroi, et en ce qu'il comporte une broche (14) et un berceau (12) amovible comprenant des moyens (11, 15) pour maintenir la broche (14) en regard de la turbine et transmettre le mouvement de rotation du second moteur à la broche.

2. Four à pyrolyse selon la revendication 1, caractérisé en ce que les moyens (11, 15) prévus sur le berceau comprennent un dispositif de renvoir (11) pour transmettre le mouvement de rotation de l'arbre (10) du second moteur (21) à la broche (14).

3. Four à pyrolyse selon la revendication 2, caractérisé en ce que le dispositif de renvoi (11) comporte une chaîne (112) et deux pignons (110, 111).

4. Four à pyrolyse selon la revendication 3, caractérisé en ce que l'extrémité de l'arbre (10) couplé au second moteur, et faisant saillie à l'intérieur de l'enceinte, est agencée pour être couplée à un premier pignon (110) du dispositif de renvoi (11).

5. Four à pyrolyse selon la revendication 4, caractérisé en ce qu'une première extrémité (13) de la broche (14) est agencée pour être couplée à un second pignon (111) du dispositif de renvoi (11).

6. Four à pyrolyse selon l'une quelconque des revendications 3 à 5, caractérisé en ce que le dispositif de renvoi (11) comprend un boîtier (11A, 11B) dans lequel sont enfermés la chaîne (112) et les deux pignons.

7. Four à pyrolyse selon la revendication 6, caractérisé en ce que le boîtier est constitué de deux demi-boîtiers (11A; 11B) percés chacun d'un orifice pour permettre respectivement le passage de l'arbre (110) couplé au second moteur (21) et le passage d'une première extrémité (13) de la broche (14).

8. Four à pyrolyse selon l'une quelconque des revendications 1 à 7, caractérisé en ce que le dispositif de renvoi (11) est soudé et/ou vissé sur le berceau (12).

9. Four à pyrolyse selon l'une quelconque des revendications 1 à 8, caractérisé en ce que le berceau (12) et le dispositif de renvoi (11) sont agencés pour que l'axe de la broche (14) soit aligné avec l'axe de la turbine.

FIG_1

0236150

## FIG_2

11C    11D    11B

11    11A

12

15

## FIG_3

11C    11E    11D    11E

114    113

111    110

11    112    11B

# FIG_4

# FIG_5

**Office européen des brevets**

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 551 644 (THOMSON-BRANDT)<br>* Pages 7,8, revendications 1-10; figures 1-3 *<br>--- | 1 | F 24 C 15/32<br>A 47 J 37/04 |
| A | FR-A-2 530 447 (THOMSON-BRANDT)<br>* Pages 5,6, revendications 1-10; figures 1-3 *<br>--- | 1 | |
| A | FR-A-2 530 448 (THOMSON-BRANDT)<br>* Page 1, abrégé *<br>--- | 1 | |
| A | DE-A-2 615 604 (BOSCH-SIEMENS) | | |
| | ----- | | |

| DOMAINES TECHNIQUES RECHERCHES (Int. Cl.4) |
|---|
| F 24 C<br>A 47 J |

Le présent rapport de recherche a été établi pour toutes les revendications

| Lieu de la recherche | Date d'achèvement de la recherche | Examinateur |
|---|---|---|
| LA HAYE | 08-04-1987 | VANHEUSDEN J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82